# EUROPEAN PATENT APPLICATION

(11) **EP 1 503 440 A2**
(43) Date of publication of application: **02.02.2005**
(21) Application number: 04253854.6
(22) Date of filing: 28.06.2004
(51) Int. Cl.: H01M 4/88, H01M 8/12

(54) **A method for manufacturing fuel cell components by low temperature processing**

(30) Priority: 23.07.2003 US 626352
(71) Applicant: Hewlett-Packard Development Company, L.P., Houston, TX 77070 (US)
(72) Inventor: Herman, Gregory S., Albany, OR 97321 (US); Clark, Benjamin, Corvallis, OR 97330 (US); Mardilovich, Peter, Corvallis, OR 97330 (US)
(74) Representative: Tollett, Ian

(57) **Abstract**

A method for forming a fuel cell component includes depositing a hydroxide or oxyhydroxide form of the component, and hydrothermally dehydrating the hydroxide or oxyhydroxide form of the component, wherein the hydrothermally dehydrating of the component establishes the grain structure of the component.

## Description

The present invention relates to a method for forming a fuel cell component, a fuel cell and apparatus including the same.

During the past several years, the popularity and viability of fuel cells for producing both large and small amounts of electricity has increased significantly. Fuel cells conduct an electrochemical reaction between chemicals such as hydrogen and oxygen to produce electricity and heat. Fuel cells are similar to batteries but they are power conversion devices and not power storage devices, respectively. Moreover, fuel cells are much cleaner than devices that combust hydrocarbons.

Fuel cells provide a direct current (DC) voltage that may be used to power motors, lights, computers, or any number of electrical appliances. While there are several different types of fuel cells, each using a different chemistry, fuel cells typically have three component parts: an anode, a cathode, and an electrolyte. Fuel cells may be classified, depending on the type of electrolyte used, into one of five groups: proton exchange membrane (PEM) fuel cells, alkaline fuel cells (AFC), phosphoric-acid fuel cells (PAFC), solid oxide fuel cells (SOFC), and molten carbonate fuel celts (MCFC).

While fuel cells produce less pollution than many other power sources, solid oxide fuel cells (SOFC) have a number of distinct advantages over other fuel cell types. Some advantages of SOFCs include reduced problems with electrolyte management, increased efficiencies compared to other fuel cell types (up to 60% efficient), high-grade waste heat, high tolerances to fuel impurities, and the internal reforming of hydrocarbon fuels (for the production of hydrogen and carbon monoxide) is possible.

Most SOFCs include an electrolyte made of a solid-state material such as a fast oxygen ion conducting ceramic. Each side of the electrolyte contains an electrode; an anode on one side and a cathode on the opposing side. Both of these electrodes may be made of a ceramic material. Typical ceramic fuel cell processing requires the formation and the sintering of these ceramic components at extremely high temperatures (up to 1500° Celsius in some cases). Moreover, because typical ceramic fuel cells include multiple ceramic layers with differing sintering requirements, many slow thermal cycling steps have to be performed to form a single fuel cell. The multiple high temperature thermal cycling steps consume both a considerable amount of time and electrical energy. Furthermore, once the fuel cells are produced, a final assembly of the fuel cell with a number of gas manifolds is required.

A method for forming a fuel cell includes depositing a hydroxide or an oxyhydroxide form of the fuel cell component, and hydrothermally dehydrating the hydroxide or oxyhydroxide form of the component, wherein the hydrothermal dehydration of the component establishes the grain structure of the component.

The accompanying drawings illustrate preferred embodiments of the present invention and are a part of the specification. The illustrated embodiments are merely examples of the present invention and do not limit the scope thereof.

**Fig. 1A** illustrates a cross-sectional view of a solid oxide fuel cell (SOFC) according to one exemplary embodiment.

**Fig. 1B** illustrates a cross-sectional view of a solid oxide fuel cell stack according to one exemplary embodiment.

**Fig. 2** is a flow chart illustrating a method of manufacturing ceramic fuel cells by low temperature processing according to one exemplary embodiment.

**Fig. 3** is a cross-sectional view illustrating a method of forming a ceramic anode according to one exemplary embodiment.

**Fig. 4** is a cross-sectional view illustrating the low temperature formation of an electrolyte according to one exemplary embodiment.

**Fig. 5** is a cross-sectional view illustrating the low temperature formation of a cathode according to one exemplary embodiment.

**Fig. 6** is a cross-sectional view of an assembled solid oxide fuel cell (SOFC) that was formed by a low temperature processing method according to one exemplary embodiment.

**Fig. 7** is a flow chart illustrating an alternative method for manufacturing ceramic fuel cells by low temperature processing techniques according to one exemplary embodiment.

Throughout the drawings, identical reference numbers designate similar, but not necessarily identical, elements.

A method for forming a ceramic fuel cell using low temperature processing is described herein. According to one exemplary implementation, described more fully below, a method for depositing a hydroxide or an oxyhydroxide form of a desired fuel cell component and subsequently performing a hydrothermal dehydration process on the hydroxide or oxyhydroxide form of the desired component is presented. The present system and method for the low temperature processing of fuel cell components will be described, for ease of explanation only, in the context of a solid oxide fuel cell (SOFC). However, the apparatus and method described herein may be used to form the ceramic components of any type of fuel cell.

The term "hydroxide" is meant to be understood both here and in the appended claims to mean any chemical compound containing a hydroxide group wherein a hydroxide group is defined as a functional group consisting of oxygen and hydrogen. Similarly, the term "oxyhydroxide" is meant to be understood broadly as referring to a hydroxide group with the presence of oxygen either added or substituted in the compound. Moreover, the phrase "sinter" is meant to be understood broadly as a process whereby material is formed into a solid mass by the application of heat and/or pressure.

In the following description, for purposes of explanation, numerous specific details are set forth in order to provide a thorough understanding of a low temperature ceramic formation process. It will be apparent, however, to one skilled in the art that the low temperature ceramic formation process may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

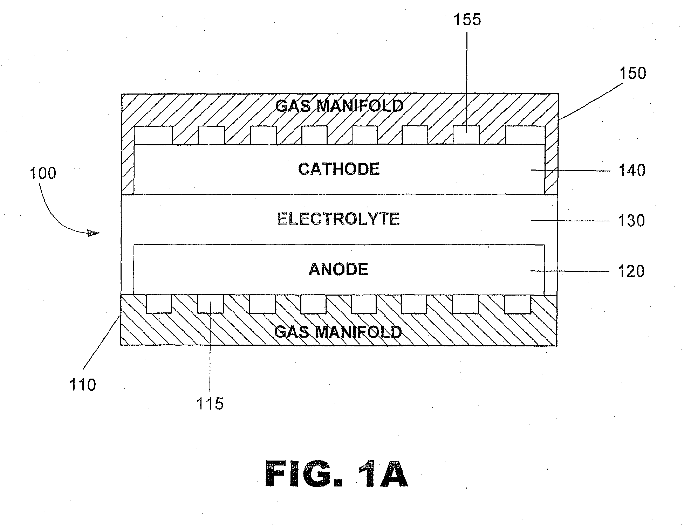

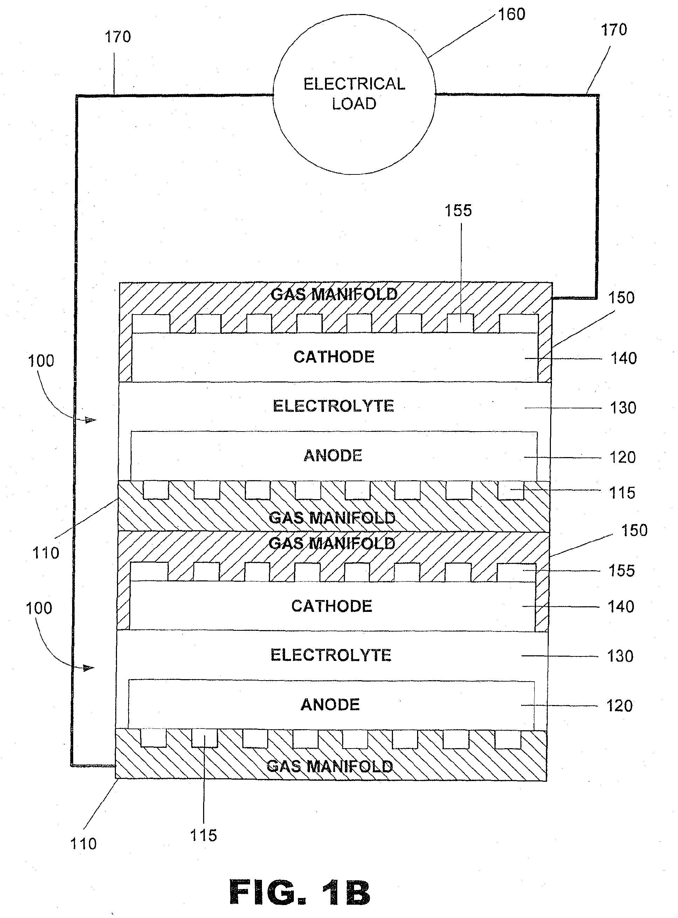

Figure 1A illustrates a cross-sectional view of a solid oxide fuel cell (SOFC) according to one exemplary embodiment. As illustrated in Figure 1, a SOFC (100) may include a first gas manifold (110) including a number of fuel channels (115), an anode (120), an electrolyte (130), a cathode (140), and a second gas manifold (150) that may also include a number of fuel channels (155).

The gas manifolds (110, 150) illustrated in Figure 1A provide structural support to a SOFC and act as electrical interconnects between multiple fuel cells according to one exemplary embodiment. The gas manifolds (110, 150) may be constructed of any material capable of providing structural support to a SOFC (100) throughout its thermal cycle while simultaneously serving as an electrical interconnect between housings including, but in no way limited to, doped lanthanum chromite for high temperature fuel cells and ferritic stainless steels for fuel cells with an operating temperature between 600 and 800 degrees Celsius. The following SOFC (100) will be described, for ease of explanation only, in the context of a SOFC disposed within ferritic stainless steel gas manifolds (110, 150). Moreover, the present method for forming ceramic fuel cells is in no way limited to forming ceramic fuel cells of a planar configuration or a housing of any specific geometry.

The gas manifolds (110, 150) illustrated in Figure 1A also include a number of fuel channels (115, 155) configured to supply fuel to the fuel cell (100) thereby facilitating the production of useable electricity. As shown in Figure 1A, the gas manifold (110) nearest the anode (120) contains fuel channels (115) that provide fuel to the anode (120). The fuel provided by the fuel channel (115) to the anode is typically hydrogen or methane. The gas manifold (150) nearest the cathode (140) also includes fuel channels (155) that may provide an oxidant such as air to the cathode of the SOFC (100). While the fuel channels (110, 150) illustrated in Figure 1A are shown in a parallel orientation respectively, opposing fuel channels may be assembled such that the fuel channels (110, 150) assume a perpendicular, or any other respective orientation.

The anode (120), the cathode (140), and the electrolyte (130) illustrated in Figure 1A are configured to produce useable electricity to an external circuit when fuel is supplied to the anode (120) by the trenches (115) of the first gas manifold (110) and oxygen is supplied to the cathode (140) by the trenches (155) of the second gas manifold (150). When in operation, fuel (usually hydrogen, H₂, or methane, CH₄) arrives at the anode (120) through the trenches (115), where it reacts with oxygen ions from the electrolyte (130) thereby releasing electrons to an external circuit. On the other side of the SOFC (100), an oxidant (such as O₂ or air) is fed to the cathode (140) through the trenches (115). The oxidant supplies oxygen ions (O²⁻) to the electrolyte (130) by accepting electrons from the external circuit. The electrolyte (130) may then conduct these ions between the electrodes (120, 140), maintaining overall electrical charge balance. As a result of the above-mentioned process, the flow of electrons in the external circuit may provide useful power.

The anode (120) illustrated in Figure 1A may be any ceramic material capable of releasing electrons to an external circuit when a fuel such as hydrogen or methane is received and reacts with the oxygen ions. The materials used to form the anode (320) may include, but are in no way limited to, a ceramic/metal composite such as an electronically conducting nickel/yttriastabilized zirconia cermet. Similarly, the cathode (140) of the SOFC illustrated in Figure 1A may be any ceramic material capable of converting oxygen or air and electrons into oxygen ions including, but in no way limited to a mixed conducting perovskite such as lanthanum manganite (LaMnO₃). The electrolyte (130) illustrated in Figure 1A may be any oxygen ion conducting electrolyte including, but in no way limited to, zirconia-based electrolytes such as yttriastabilized zirconia, gadolinium-doped cerium-dioxide, Ba₂In₂O₅, or a (strontium, magnesium)-doped LaGaO₃ (LSGM).

Figure 1B illustrates two stacked SOFCs (100) configured to provide usable power to an electrical load (160) according to one exemplary embodiment. As shown in Figure 1 B, a number of SOFCs (100) may be stacked or otherwise electrically coupled to one another in order to compound the amount of useable power produced. As shown in Figure 1 B, a number of SOFCs (100) may be configured such that their gas manifolds (110, 150) are electrically coupled. The multiple SOFCs (100) produce useable power as explained above, and may provide the useable power to an electrical load (160) through a number of electrical leads (170). The electrical load (160) illustrated in Figure 1 B may be any power consuming device such as, by way of example only, a lap top computer, a television, a motor, a light, etc.

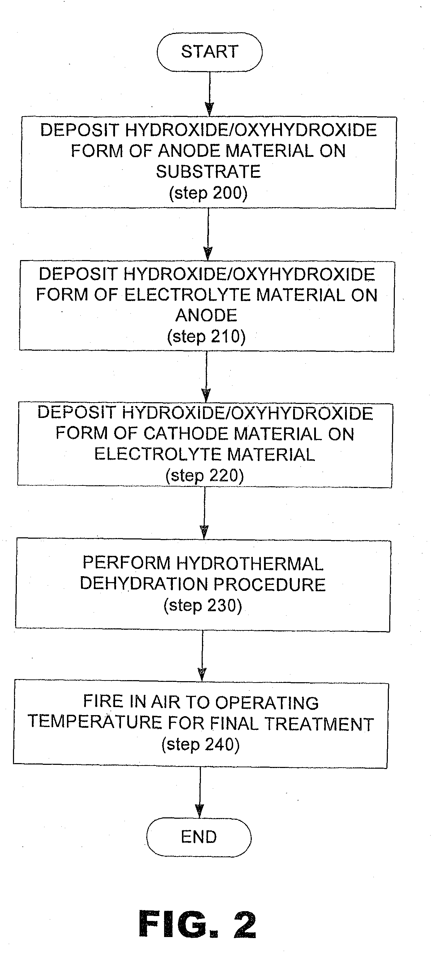

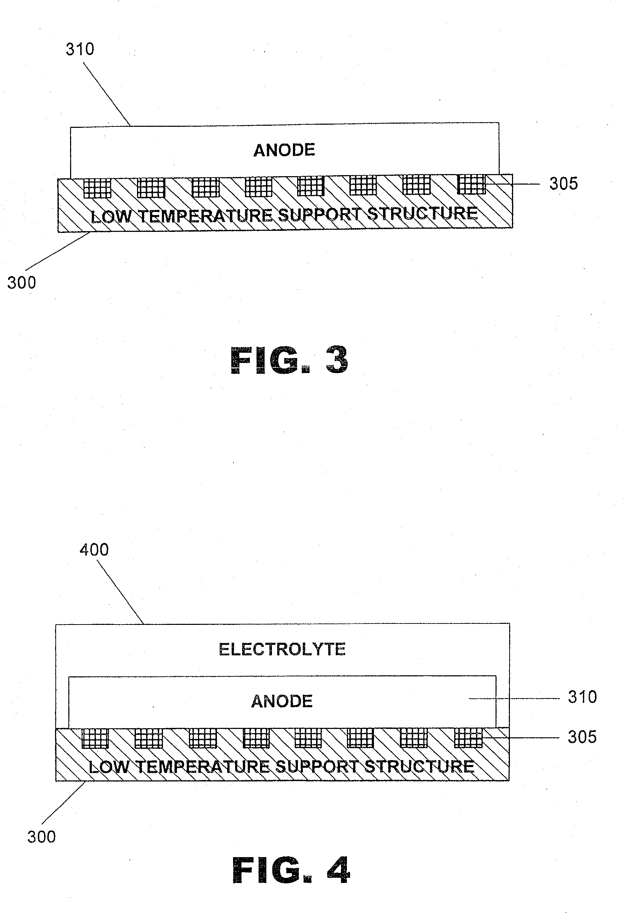

Figure 2 is a flow chart illustrating a method for manufacturing ceramic fuel cells using a low temperature processing method according to one exemplary embodiment. As shown in Figure 2, the formation process may begin by depositing a hydroxide or oxyhydroxide form of an anode material on a substrate (step 200). Once the hydroxide or oxyhydroxide form of an anode material has been deposited, a hydroxide or oxyhydroxide form of an electrolyte material may be deposited on the anode material (step 210) followed by the deposition of a hydroxide or oxyhydroxide form of a cathode material on the electrolyte material (step 220). Once all of the material has been deposited, a hydrothermal dehydration procedure may be performed (step 230). The formation process may then be completed by firing the ceramic fuel cell in open air to its operating temperature for final treatment (step 240). The exemplary method illustrated in Figure 2 will now be described in further detail with reference to Figures 3-6.

As stated earlier, the low temperature manufacturing of a ceramic fuel cell may begin with the deposition of a hydroxide or oxyhydroxide form of anode material on a substrate (step 200). As shown in Figure 3, the substrate used to receive the deposition of the hydroxide or oxyhydroxide form of anode material (310) may be a low temperature support structure (300) such as a ferritic stainless steel or high temperature plastic fuel manifold. Typically, SOFCs must be formed on a high temperature substrate and then subsequently transferred to a number of fuel manifolds for assembly. However, the present low temperature SOFC formation method is performed at temperatures below temperatures that would melt, distort or damage ferritic stainless steel. Moreover, the operating temperatures of the present method allow high temperature plastics to be used as a substrate during the present method. As a result, the desired low temperature support structure (300) may be used as the substrate that receives the hydroxide or oxyhydroxide form of anode material.

As shown in Figure 3, a number of trenches (305) may be formed in the low temperature support structure (300) in order to provide fuel to the completed SOFC (100; Fig. 1A). However, during the formation of the SOFC, the trenches may be filled with an organic, metallic, or inorganic sacrificial material such as photo resist, UNITY, or any other material that may be etched or thermally decomposed after formation of the fuel cell components. The sacrificial material may be deposited in the trenches (305) of the fuel manifold (300) in order to provide structural support to the hydroxide or oxyhydroxide form of anode material (310) during formation and then may be removed either thermally or chemically after formation.

The hydroxide or oxyhydroxide form of the anode material that is deposited on the ferritic stainless steel fuel manifold (300) according to step 200 may be any material that, when deposited as a film and hydrothermally processed, forms an anode including, but in no way limited to, a type of zirconium hydroxide (Zr(OH)₍₄₎). Moreover, the hydroxide or oxyhydroxide form of the anode material (310) may be deposited on the low temperature support structure (300) by any appropriate film deposition means including, but in no way limited to, screen printing, spin-on deposition, colloidal spray deposition, doctor blade methods, tape casting, or any appropriate combination thereof. For ease of explanation only, the present method and apparatus will be described herein in the context of a screen printing deposition method. The hydroxide or oxyhydroxide form of the anode, and subsequent layers, may be deposited in a fairly dense manner to reduce the effects of shrinkage during the SOFC formation process.

Once the hydroxide or oxyhydroxide form of the anode material (310) has been deposited on the low temperature support structure (step 200; Fig. 2), a hydroxide or oxyhydroxide form of electrolyte material may be deposited on and around the exposed surface of the anode material (step 210; Fig. 2). As shown in Figure 4, the hydroxide or oxyhydroxide form of the electrolyte material (400) may be deposited such that the electrolyte material (400) surrounds the entire exposed surface of the anode material (310) and may even contact the low temperature support structure (300). The hydroxide or oxyhydroxide form of the electrolyte material (400) may include any material which, when deposited as a film and hydrothermally dehydrated, forms an electrolyte ceramic including, but in no way limited to, a type of zirconium hydroxide (Zr(OH)_{(3 or 4)}). Additionally, the hydroxide or oxyhydroxide form of the anode material (310) may be deposited on the anode material (310) by any of the deposition methods listed above. According to one exemplary embodiment, the anode material (310) and the electrolyte material (400) are both deposited using a screen printing method. Also similar to the deposition of the anode material (310), the electrolyte material (400) may be deposited in a fairly dense state in order to reduce the effects of thermal contraction during further processing.

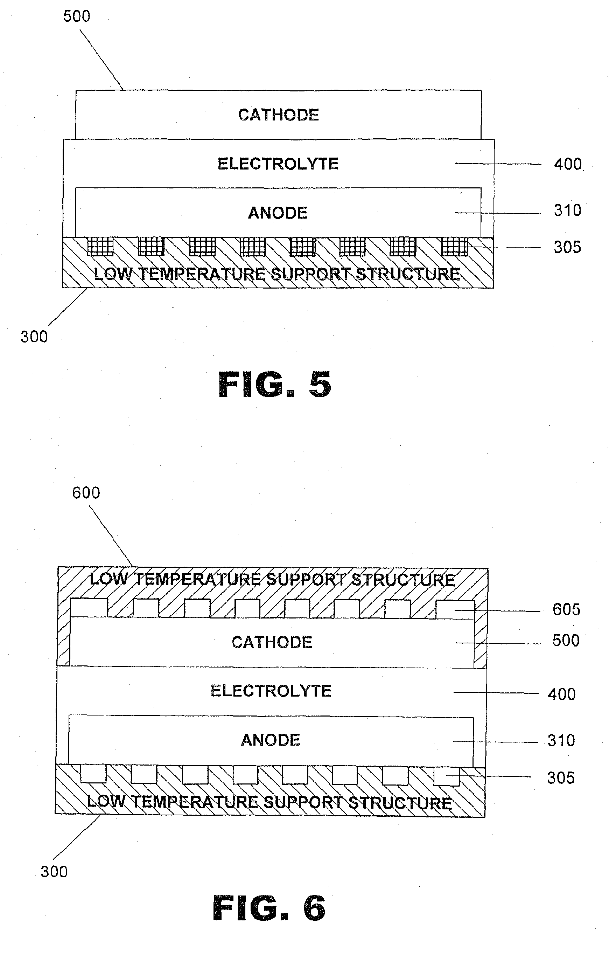

When the electrolyte material (400) has been deposited, a hydroxide or oxyhydroxide form of cathode material may be deposited on the electrolyte material (step 220; Fig. 2). As illustrated in Figure 5, the hydroxide or oxyhydroxide form of cathode material may be deposited on the layer of electrolyte material (400) deposited in step 210. The hydroxide or oxyhydroxide form of cathode material (500) may be any material which when deposited as a film and hydrothermally dehydrated forms a ceramic cathode including, but in no way limited to, a lanthanum manganate hydroxide. Moreover, the hydroxide or oxyhydroxide form of cathode material (500) may be deposited according to any of the deposition methods previously mentioned. According to the present exemplary embodiment, the hydroxide or oxyhydroxide form of cathode material (500) may be deposited through screen printing methods.

With the hydroxide or oxyhydroxide forms of the anode (310), the electrolyte (400), and the cathode (500) deposited on the low temperature support structure (300), a top low temperature support structure (600) may be coupled to the SOFC as illustrated in Figure 6 and a hydrothermal dehydration procedure may be performed on the entire structure (step 230; Fig. 2) thereby sintering the deposited layers. Hydrothermal dehydration is a method that utilizes an aqueous solution at conditions of elevated temperatures and/or elevated pressures to form particles by nucleation and growth at the controlled temperature and pressure conditions. According to one exemplary embodiment, the structure containing the hydroxide or oxyhydroxide forms of anode (310), electrolyte (400), and cathode (500) material is placed in a thermally controllable pressurized vessel such as, by way of example, a bomb calorimeter, a water receiving oven, or a localized jet of steam. A bomb calorimeter may supply thermal energy as well as background pressure, supplied by water, to a structure contained therein. The hydroxides or oxyhydroxide films are converted into oxide ceramic form by the introduction of the heat and pressure. The heat and pressure facilitate and enhance the dissolution and recrystallization of the anode (310), the electrolyte (400), and the cathode (500). The heating includes a "ramped" heating stage to bring the SOFC (610) to a desired temperature that may reach temperatures over 200 °C depending on the background pressure applied. The hydrothermal dehydration process may be carried out in a batch, a semi-batch, or a continuous process. Whether batch, semi-batch, or continuous process, reactor residence time may vary from about 10 min. to well over several hours.

The temperature and pressure applied during the hydrothermal dehydration process (step 230; Fig. 2) may be precisely controlled for the purpose of obtaining specific crystalline structure in the resulting anode (310), electrolyte (400), and cathode (500) layers. The crystalline structure may be controlled to obtain a specified electrical or ion conductivity in the resulting ceramic. Moreover, the potential of Hydrogen (pH) or oxidizing power of the water introduced in the hydrothermal dehydration process may be controlled through the introduction of additional materials including, but in no way limited to, hydrogen peroxide or a base. The additional materials may be added in order to modify the solid solubility of the solution, thereby modifying rate of particle growth for the purpose of controlling the specific crystalline structure and grain growth.

While the present method is described within the context of hydrothermally dehydrating hydroxide and oxyhydroxide films, similar methods may be used to form any number of structures including, but in no way limited to, iron oxide, titanium oxide, nickel oxide, zirconium oxide, aluminum oxide, and silicon oxide. Precursor solutions from which the above mentioned structures are made may include, but are in no way limited to, aqueous nitrate solutions, sulfate solutions, and oxalate solutions.

Once the SOFC (610) has been hydrothermally dehydrated and the anode (310), the electrolyte (400), and the cathode (500) have been formed, the SOFC (610) may be fired in open air to the operating temperature of the SOFC for final treatment (step 240; Fig. 2). The final treatment may serve a number of purposes including, but in no way limited to, establishing the final disposition of the SOFC including ion or electrical conductivity, as well as removal of the sacrificial layer of material present in the trenches (305; Fig. 3) of the low temperature support structure (300; Fig. 3). When the final treatment has been completed, the SOFC (610; Fig. 6) may be incorporated into a fuel stack to produce useable power as illustrated in Figure 1B.

A SOFC formed according to the above-mentioned method may have a number of advantages over a traditionally formed SOFC. First, the use of controllable low temperature processing allows for the use of non-toxic, environmentally friendly materials such as hydroxides and oxyhydroxides. Moreover, since the processing temperature of the present method is lower than typical SOFC formation methods, the amount of energy consumed by the processing apparatus and the overall processing cost of the SOFC will be reduced. Additionally, since the above-mentioned process forms the SOFC using a low level of heat, the SOFC may be formed directly on a desired low temperature fuel manifold, thereby reducing assembly time and cost.

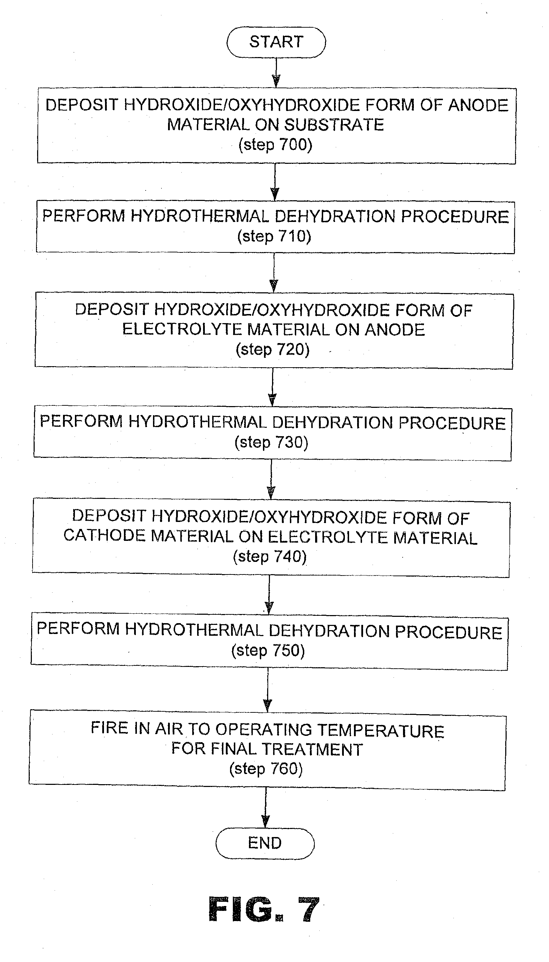

According to one alternative embodiment, illustrated in Figure 7, multiple hydrothermal dehydration procedures may be performed during the formation of the SOFC. Specifically, as shown in Figure 7, an alternative embodiment of the present SOFC formation method may include depositing a hydroxide or oxyhydroxide form of anode material on a substrate (step 700) followed by a hydrothermal dehydration procedure (step 710). Once the hydrothermal dehydration procedure has sufficiently established the desired grain structure of the anode, a hydroxide or oxyhydroxide form of an electrolyte material is disposed on the anode (step 720) and a hydrothermal dehydration procedure is again performed (step 730) followed by the deposition (step 740) and hydrothermal dehydration (step 750) of a hydroxide or oxyhydroxide form of cathode material. Lastly, according to the alternative embodiment illustrated in Figure 7, the SOFC is fired in air to the operating temperatures of the SOFC for final treatment (step 760).

The alternative method illustrated in Figure 7 is very similar to the method illustrated in Figure 2 explained above, except that a hydrothermal dehydration procedure (steps 710, 730, 750) is performed after the deposition of each hydroxide or oxyhydroxide film (steps 700, 720, 740). The hydrothermal dehydration procedure may be performed between the depositions in order to more precisely control and/or vary the pH or oxidizing power of the hydrothermal dehydration procedure for each layer of fuel cell components. This individual formation of each layer of the SOFC allows for an increased control of the grain or particle size produced during the hydrothermal dehydration procedure. The control of the resulting grain or particle size effectively controls the active surface exposure of each fuel cell component. This control of the active surface exposure may allow precise control of the electrical and/or ionic conductivity characteristics of the resulting SOFC components formed.

Although exemplary embodiments have been described above, numerous modifications and/or additions to the above-described embodiments would be readily apparent to one skilled in the art. By way of example, but not limitation, the order of formation of the SOFC layers described above may be varied. Moreover, selective components, rather than all of the components, of a SOFC may be formed according to the present method. That is, some components may be formed by traditional methods while others are formed according to the present method. It is intended that the scope of the present method extend to all such modifications and/or additions.

In conclusion, the present system for the low temperature formation of ceramics, in its various embodiments, simultaneously reduces the process time required to form a solid oxide fuel cell as well as reducing the energy and assembly times required. Specifically, the method provides for the sintering of ceramic layers through a hydrothermal dehydration procedure that operates well below traditional sintering temperatures. As a result, the amount of power needed to form a solid oxide fuel cell is reduced. Moreover, the reduced operating temperatures needed to produce the solid oxide fuel cell allows for the use of substrates or components with a wider range of melting temperatures than traditionally possible. Additionally, precise control of the grain or particle size produced by the present method allows for precise design of the electrical and ionic conductivities of the ceramic layers of the solid oxide fuel cell.

The preceding description has been presented only to illustrate and describe exemplary embodiments. It is not intended to be exhaustive or to limit the exemplary embodiments to any precise form disclosed. Many modifications and variations are possible in light of the above teaching. It is intended that the scope be defined by the following claims.

## Claims

1. A method for forming a fuel cell component comprising:
depositing a hydroxide or oxyhydroxide form of said component; and
hydrothermally dehydrating said hydroxide or oxyhydroxide form of said component;
wherein said dehydrating step establishes a grain structure of said component.

2. A method as claimed in claim 1 further comprising firing said fuel cell component to an operating temperature of a fuel cell to fix a disposition of said fuel cell component.

3. A method as claimed in claim 2, wherein said fuel cell comprises a solid oxide fuel cell (SOFC) (100).

4. A method as claimed in any preceding claim, wherein said hydroxide or oxyhydroxide form of said fuel cell component is deposited on a low temperature support structure (300).

5. A method of forming a solid oxide fuel cell (SOFC) (100) comprising:
depositing a hydroxide or oxyhydroxide form if an anode material (310);
depositing a hydroxide or oxyhydroxide form of an electrolyte material (400);
depositing a hydroxide or oxyhydroxide form of a cathode material (500); and
hydrothermally dehydrating said hydroxide or oxyhydroxide form of said deposited materials;
wherein said dehydrating step sinters said materials.

6. A method as claimed in claim 5 wherein the dehydrating step is carried out simultaneously on the anode, electrolyte and cathode.

7. A fuel cell comprising:
a cathode (140);
an anode (120); and
an electrolyte (130) disposed between said anode (120) and said cathode (140);
wherein one of said anode (120), said cathode (140), or said electrolyte (130) is obtainable by means of a method as claimed in any of claims 1 to 4.

8. A fuel cell as claimed in claim 7, wherein said anode (120), said cathode (140), and said electrolyte (130) are all formed by a hydrothermal dehydration process.

9. An electrochemical apparatus comprising:
a housing; and
a fuel cell as claimed in claim 7 or 8.

10. An electronic device comprising:
an electrochemical cell providing power to an electrical power consuming apparatus;
a fuel source; and
a fuel flow path fluidly coupling said electrochemical cell and said fuel source;
wherein said electrochemical cell includes a housing and a fuel cell as claimed in claim 7 or 8.
